# EUROPEAN PATENT SPECIFICATION

(11) **EP 0 773 189 B1**
(45) Date of publication and mention of the grant of the patent: **22.03.2000**
(21) Application number: 96203007.8
(22) Date of filing: 29.10.1996
(51) Int. Cl.: C01B 21/14, B01J 23/44

(54) **Process for the preparation of hydroxylammonium salts**
Verfahren zur Herstellung von Hydroxylammoniumsalzen
Procédé de production des sels d'hydroxylammoniums

(30) Priority: 10.11.1995 BE 9500936
(43) Date of publication of application: 14.05.1997
(73) Proprietor: DSM N.V., 6411 TE Heerlen (NL)
(72) Inventor: Van Lieshout, Lambertus Hubertus Wilhelmus Maria, 6235 BK Meerssen (NL); Schevelier, Peter Arnold Ceciliaan, 6227 GK Maastricht (NL); Lefferts, Leonardus, 6181 BG Stein (NL)

(56) References cited:
- DE-A- 2 231 440
- FR-A- 2 285 340
- NL-A- 7 902 291
- US-A- 4 832 938
- JOURNAL OF THE CHEMICAL SOCIETY. FARADAY TRANSACTIONS, vol. 89, no. 14, 21 July 1993, pages 2537-2543, XP000381461 NAOKI TOSHIMA ET AL: "POLYMER-PROTECTED PALLADIUM-PLATINUM BIMETALLIC CLUSTERS: PREPARATION, CATALYTIC PROPERTIES AND STRUCTURAL CONSIDERATIONS"
- Johnson Matthey (Materials Technology Division-Chemicals): Summary of standard catalysts and typical applications (Palladium),
- Degussa Chemical Catalysts: Application Data Sheet.

## Description

The invention relates to a process for the preparation of a hydroxylammonium salt through the catalytic reduction of nitrate ions in an acid medium, in the presence of an activated catalyst, which catalyst comprises carrier particles with metal particles containing palladium and platinum.

An important application of hydroxylammonium salts is in the preparation of oximes from ketones or aldehydes, in particular the preparation of cyclohexanone oxime from cyclohexanone. Cyclohexanone oxime can be rearranged into caprolactam from which nylon is prepared. Consequently, the synthesis of hydroxylammonium salts is commonly coupled with other known processes, such as the preparation of cycloalkanone oxime. Hydroxylammonium salts are also used in the production of antioxidants, dyeing auxiliaries, and photographic chemicals. A cyclic process is known for the preparation of an oxime. The reaction medium is buffered with the aid of an acid, for example phosphoric acid and/or sulphuric acid and the buffer salts derived from these acids, for example alkali salts and/or ammonium salts. In the synthesis of hydroxylammonium, nitrate ions or nitrogen oxides, for example, are converted into hydroxylammonium ions with the aid of hydrogen according to the following reaction: ${\text{2 H}}^{\text{+}} {\text{+ NO}}_{\text{3}} {}^{\text{-}} {\text{+ 3 H}}_{\text{2}} {\text{→ NH}}_{\text{3}} {\text{OH}}^{\text{+}} {\text{+ 2 H}}_{\text{2}} \text{O}$

Catalysts for the preparation of hydroxylammonium salts are commercially available o.a. from Johnson Matthey and Degussa. However, the activity and selectivity of these catalysts can be improved.

Catalysts for the preparation of hydroxylammonium salts are also known from DE-A-2231440. In DE-A-2231440 however no indication is given with respect to the relative concentrations of palladium and platinum in each metal particle being substantially the same and the positive effect thereof with respect to the activity and selectivity of the catalyst.
In the Journal of the Chemical Society, Faraday Transactions, vol. 89, no. 14, pages 2537-2543 by N. Toshima et al. hydrogenation catalysts with palladium and platinum are described, the relative concentrations of the palladium and the platinum in each metal particle however are not disclosed.

The aim of the invention, now, is to provide a process in which the catalysts have an even better selectivity and/or activity.

This aim is achieved because the relative concentrations of the palladium and the platinum in each metal particle on the carrier particles are substantially the same.

This is not the case with the present commercial catalysts.

'Substantially the same' is here defined as a standard deviation of the platinum concentration in each palladium-platinum metal particle, in percent by weight, of at most 4% absolute.

Preferably the standard concentration thus defined is smaller than 3.5%, in particular smaller than 3%.

The weight ratio of the palladium and the platinum in the catalyst may lie between 6:4 and 9.9:0.1. Preferably the ratio lies between 7:3 and 9.5:0.5.

In principle, any material that is stable in the reaction medium can be used as the carrier, for example active carbon, graphite or silica.

The average particle size of the carrier is in practice smaller than 50 µm. 'Average particle size' is understood to mean that 50 vol.% of the particles is larger than this diameter. However, a carrier with which at least 90 vol.% of the total amount of particles has a diameter of less than 20 µm has also proved to be particularly suitable. In view of the fineness of the carrier particles, removing the catalyst through filtration may prove difficult. Normal filtration may be achieved without adversely affecting the catalyst's activity by adding an amount of inert material, for example carrier material without metal particles, having a particle diameter that exceeds that of the carrier particles of the catalyst, for example about 20-100 µm. An amount of 0.3-10 g of inert material per gram of catalyst material is suitable.

Usually, the average particle size exceeds 0.1 µm. If use is made of a cross-flow filtration technique the particle size preferably exceeds 1 µm, in particular it exceeds 5 µm. If a more conventional filtration technique is used, the carrier particle size preferably exceeds 10 µm.

The catalyst must be activated; the catalyst may be activated by the presence of one or more catalyst activators. The catalyst activator may be an element from the group comprising Cu, Ag, Au, Cd, Ga, In, Tl, Ge, Sn, Pb, As, Sb and Bi. Compounds containing the elements in question may also be used as catalyst activators, for example oxides, nitrates, phosphates, sulphates, halogenides, tartrates, oxalates, formiates and acetates. The elements or their compounds can be directly applied to the catalyst or they can be added to the reaction medium. A very suitable result can be obtained if about 0.01-5 mg, preferably about 0.02 to about 4 mg of element(s) from the above group is present per gram of catalyst, in case the catalyst has a surface of between about 5 and about 10 m²/g catalyst. The larger the surface the more activator is needed.

The H₂ pressure at which this reaction takes place is generally between 1 and 50 bar, preferably between 5 and 25 bar. The total pressure of the reaction may be controlled by mixing an inert gas with the hydrogen. The H₂ used may or may not be purified. Purification may take place with the aid of for example active carbon for the purpose of removing organic components, a palladium catalyst for the purpose of removing oxygen and/or zinc oxide for removing sulphur and ruthenium to promote the conversion of CO and CO₂. If helium is mixed with the H₂, the helium can be purified with the aid of active carbon. Other inret gases like argon, methane or nitrogen are also suitable.

Hydroxylammonium salts can be prepared at a pH between 1 and 6, preferably between 1 and 4. The pH of the reaction may be maintained by addition of a strong mineral acid, such as hydrochloric, nitric, sulphuric or phosphoric acid or salts thereof.

The temperature may vary between 20 and 90°C; preferably a temperature of between 30 and 70°C is used.

The invention will be further elucidated with reference to the following examples, without being limited thereto.

### Examples and comparative experiments

The examples and comparative experiments were carried out in a thermostatted pressure reactor made of chrome-nickel steel, having an internal diameter of 80 mm and a volume of about 300 ml, according to the following process: the reactor was fitted with four 8-mm-wide baffles and a 6-blade turbine stirrer with a cross-section of 40 mm and blades of 10x10 mm. The reactor was operated as a three-phase slurry reactor with a continuous throughput of the liquid and gas phases, while the solid, powdered catalyst was retained in the reactor with the aid of a Teflon^{R} membrane filter in the liquid outlet. A liquid feed containing 3.2 mol/l nitric acid dissolved in an aqueous 3.3 mol/l phosphoric acid buffer plus 0.1 mol/l NaOH was fed to the reactor with the aid of a pump. The volume of the liquid phase in the reactor was kept at a constant value of 115 ml. Hydrogen was also fed to the reactor. The reactor pressure was kept at a constant level with the aid of a pressure regulator in the gas outlet; the off-gas was cooled before the pressure regulator, while the total off-gas flow rate was measured after the pressure regulator. The hydrogen partial pressure was varied at a constant total pressure by mixing with helium.

The reactor was operated at a constant pH of 1.8. To this end the supply of H⁺ via the feed was adjusted to the amount consumed in the reaction via a pH measurement in the liquid outlet and adjustment of the feed flow rate.

All the products were analysed on-line. The concentrations of the N₂, NO and N₂O gases in the off-gas were measured with the aid of a gas chromatograph. The concentrations of hydroxylamine and NH₄⁺, in addition to the remaining H⁺, were determined by an automatic titrator. The catalysts were fed to the reactor; the concentrations are shown in the following tables. The aim was to ensure constant activity in the reactor, which means that more or less catalyst was used, depending on the catalyst's activity. Then the reactor was closed and inertised with the aid of helium. After the inertisation, a pressure of 40 bar H₂ was created and the reactor was filled with 115 ml of liquid having the composition of the product. Then the set-up was started by introducing feed via the pump. The temperature was 55°C and the stirring rate was 1300 rpm (rotations per minute).

The catalyst was activated with the aid of Ge, which was dosed, as a solution of GeO₂ in water or dissolved in the feed, in steps in the course of the experiment. The first dose was each time added within a few minutes (between 1 and 10 minutes) after the start.

The activation was realised as follows: a first dose of approx. 0.0625 ML (monolayer) of Ge, followed by the same amount after 24 hours, to a total of 0.125 ML; then 0.0625 ML of Ge every 48 hours, to a total of 0.31 or 0.375 ML.

The concept 'monolayer' is defined as follows: a complete monolayer of Ge corresponds to the number of Pd and/or Pt atoms in the surface of the metal particles. This number can be determined with the aid of CO chemisorption, on the assumption that every atom of noble-metal on the surface adsorbs one CO molecule.

Activation was effected in steps because the optimum degree of activation is not known beforehand.

The feed flow rate was between 0.9 and 5 ml/min, depending on the catalyst's activity, the hydroxylamine concentration each time being typically 0.9-1.0 mol/l.
The activity A, expressed in mmol of NO₃⁻/gₘₑₜ.hr, was calculated as the sum of the product yield according to equation (1):${\text{A = Y-HYAM + Y-NH}}_{\text{4}} {}^{\text{+}} {\text{+ Y-N}}_{\text{2}} {\text{+ Y-NO + Y-N}}_{\text{2}} \text{O}$ where Y stands for yield, hyam for hydroxylamine. The amount of metal in the catalyst in grams is gₘₑₜ. The yield of the products in the liquid phase was calculated on the basis of the standardised concentrations c in mol/l, the liquid flow rate Q_{feed} in ml/min and the amount of precious metal introduced with the catalyst, expressed in g (gₘₑₜ), according to (2):${\text{Y(x) = c(x) * Q}}_{\text{feed}} {\text{* 60 / g}}_{\text{met}}$ where x may be hydroxylamine or NH₄⁺. Q_{feed} was calculated from the weighed decrease in the feed (in g) with time and the density of the liquid (g/ml) that was measured before use.
The yields of the products in the gas phase were calculated from the concentrations c in vol.% measured by the gas chromatograph, the off-gas flow rate Q_{gas} in Stl/hr and the amount of noble-metal (gₘₑₜ):${\text{Y(y) = a * [c(y)/100] * Q}}_{\text{gas}} {\text{* 1000 / (24.04 * g}}_{\text{met}} \text{)}$ where y stands for N₂, NO or N₂O and where
a = 1 in the case of NO
a = 2 in the case of N₂ and N₂O
The factor 24.04 is the molar gas volume in L at 1 atm., 20°C.
Q_{gas} was calculated by summing the measured supplied feed gases and the calculated gaseous products formed, after subtraction of the calculated summed H₂ consumption for all products.
The selectivity S, expressed in %, of each catalyst was calculated with the aid of the previously determined yield Y and the activity A according to:$\text{S(z) = 100 * Y(z) / A}$ where z stands for one of the products hydroxylamine, NH₄⁺, N₂, NO or N₂O.

The selectivities were hence based on converted NO₃⁻ and were calculated on the basis of the measured products.

The weight ratio of the palladium and the platinum of the separate metal particles was determined with the aid of transmission electron microscopy (TEM) with element analysis, energy-dispersive X-ray analysis (EDX). The employed apparatus was a VG HB-5 STEM^{R} from Vacuum Generators, equipped with a Field Emission Gun (FEG).

The catalyst was first embedded in polymethylmethacrylate (PMMA), from which 70-nm-thick slices were cut. Then 5 carrier particles were selected, after which 5 individual metal particles were measured per carrier particle, 4 metal particles at the edge of the carrier particle and 1 metal particle at the centre of the carrier particle. The slices were then irradiated in a transmission electron microscope (TEM) with the aid of a bundle of electrons. The acceleration tension was 120 kV. This led to the generation of element-specific X-ray radiation in the slices, which was detected with the aid of a Tracor-Explorer^{R} EDX detector in 500 seconds. The Pd/Pt ratio was calculated from the measured amount of X-ray radiation, on the basis of 100% standardisation of the Pd+Pt concentrations. The concentrations are shown in the tables.

### Example I and Comparative Experiments A-C

In the first series of experiments catalysts were tested at 40 bar H₂ pressure. The catalysts had a 80-20 Pd/Pt ratio. The activity and selectivity are given at the 0.31 ML Ge, the dose resulting in maximum selectivity towards hydroxylamine. The catalyst with a standard Pt deviation in the Pd/Pt alloy of 2.5 showed both a higher selectivity and a higher activity, as is shown in Table I.

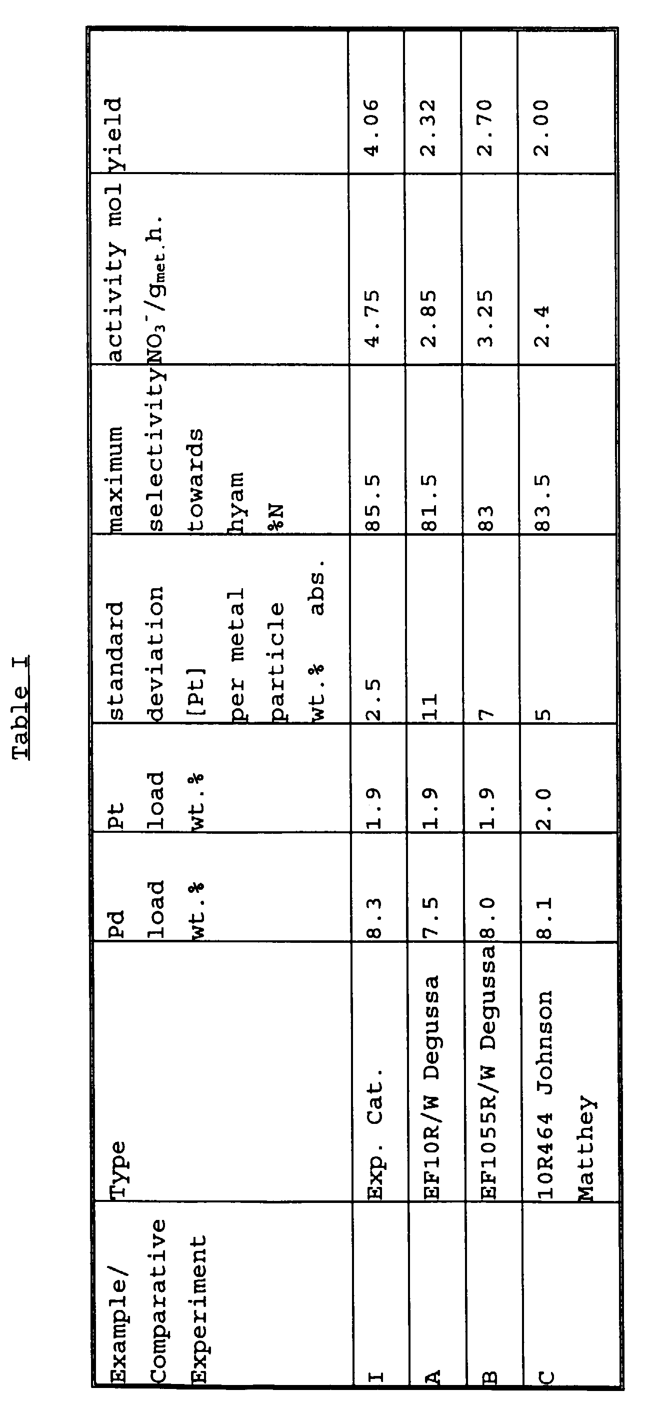

### Example II and Comparative Experiment D

In these two experiments the catalysts used in Comparative Experiment C and Example I were used at a H₂ pressure of 12 bar. The activity and selectivity arge given at 0.375 ML Ge. The use of a lower H₂ pressure causes the activity and selectivity to decrease. It was unexpectedly found that the selectivity of the catalyst according to the invention decreases much less.

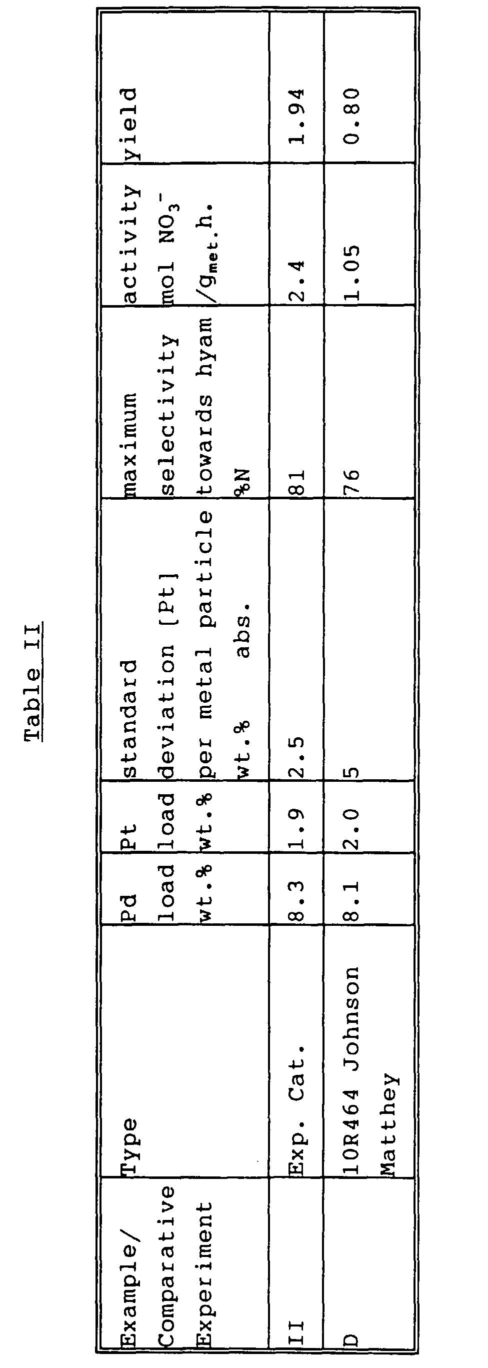

### Examples III-V and Comparative Experiment E

Catalysts with a 9:1 Pd/Pt ratio supplied by Engelhard and a commercial catalyst with a 8:2 Pd/Pt ratio supplied by Johnson Matthey were tested at 10 bar H₂ at 0.31 ML Ge. A high selectivity was obtained at an acceptable activity compared with Experiment E. The results are shown in Table III.

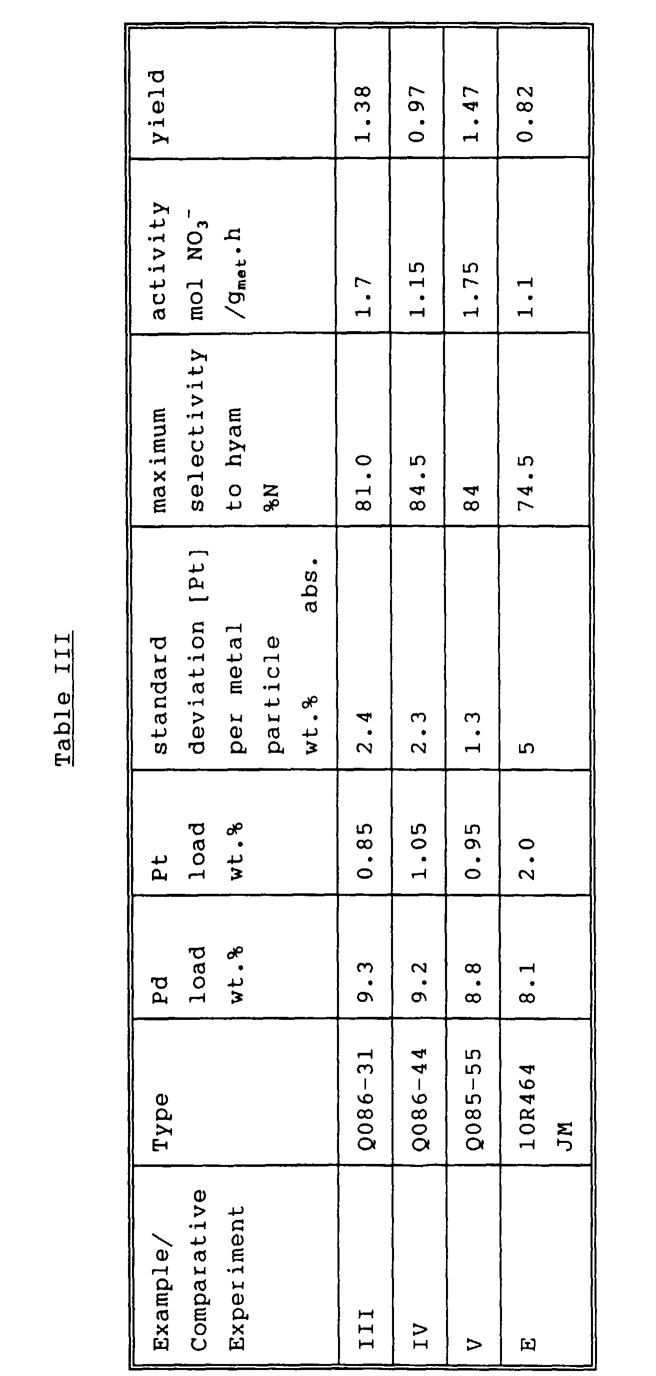

### Examples VI and VII and Comparative Experiment F

Catalysts with a 9:1 Pd/Pt ratio were supplied by Engelhard, a commercial catalyst supplied by Johnson Matthey with a Pd/Pt ratio of 8:2 were tested at 10 bar H₂. The measurements were taken at 0.375 ML Ge. The results given in Table IV show that the selctivity is much improved.

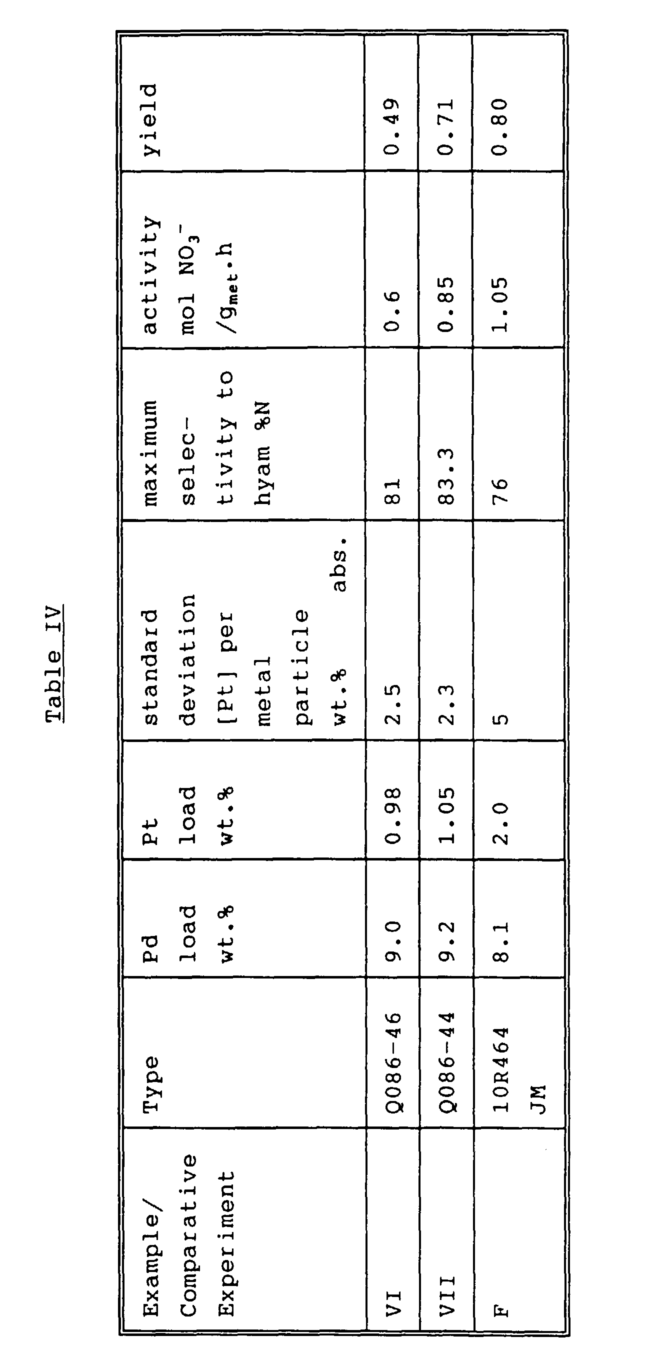

### Examples VIII-XI and Comparative Experiment G

Catalysts with a 9:1 and 8:2 Pd/Pt ratio were suppied by Engelhard and a commercial catalyst with a 8:2 Pd/Pt ratio was supplied by Johnson Matthey were tested at 10 bar H₂ at 0.25 ML Ge. Selectivity is again much improved, see the results shown in Table V.

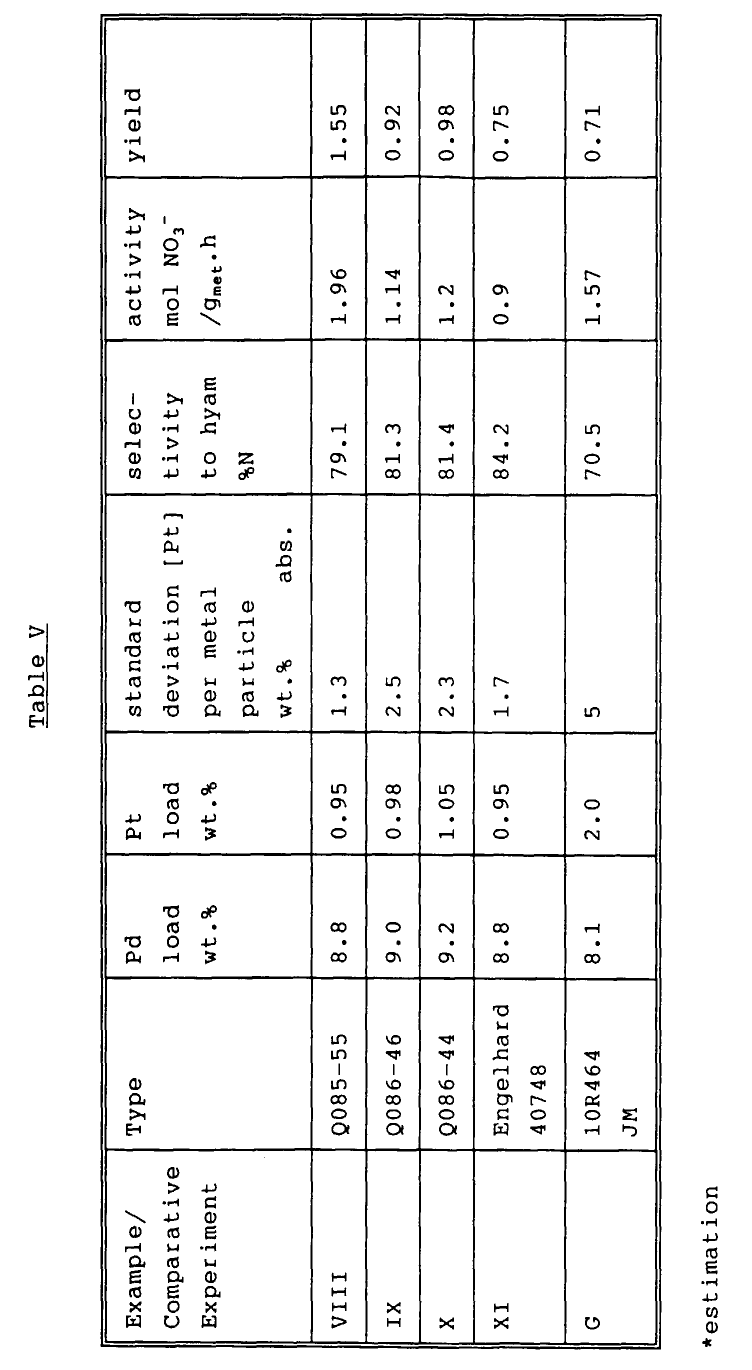

### Example XII and Comparative Experiment H

Catalysts, characteristics shown in Table VI, were tested at 5 bar H₂, at 0.25 ML Ge. Selectivity improvements are shown in Table VI.

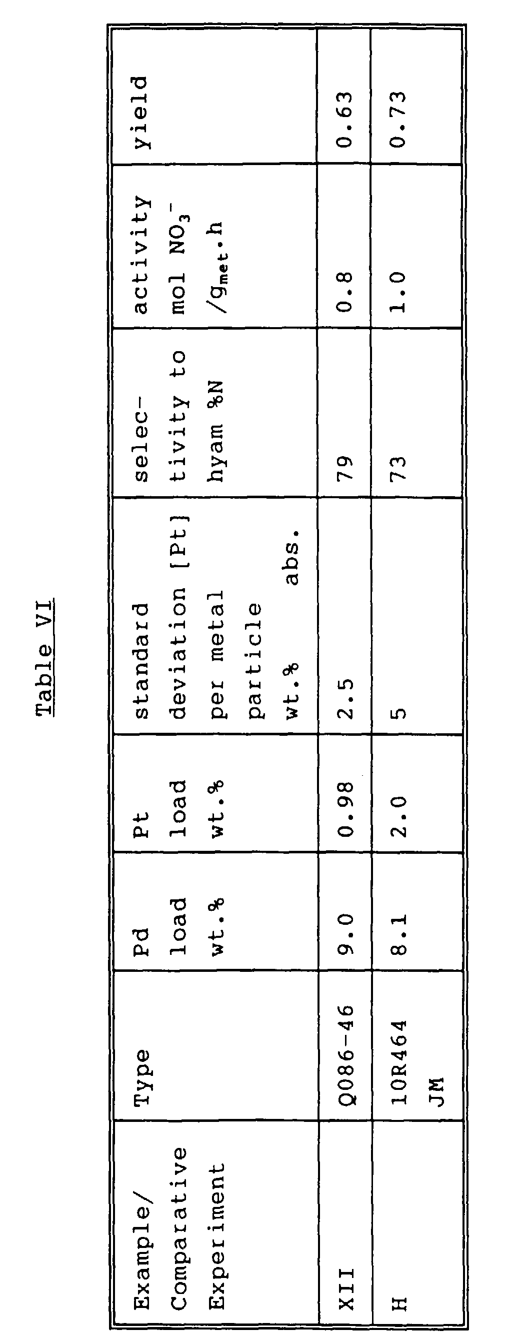

## Claims

1. Process for the preparation of a hydroxylammonium salt through catalytic reduction of nitrate ions in an acid medium with hydrogen, in the presence of an activated catalyst, which catalyst comprises carrier particles with metal particles containing palladium and platinum, characterised in that the relative concentrations of the palladium and the platinum in each metal particle are substantially the same, the platinum concentration in each metal particle has a standard deviation of less than 4% absolute.

2. Process according to claim 1, characterised in that the platinum concentration in each metal particle has a standard deviation of less than 3.5% absolute.

3. Process according to claim 2, characterised in that the platinum concentration in each metal particle has a standard deviation of less than 3% absolute.

4. Process according to any one of claims 1-3, characterised in that the palladium:platinum weight ratio in each metal particle is between 7:3 and 9.9:0.1.

5. Process according to any one of claims 1-4, characterised in that the carrier material consists of active carbon, graphite or silica.

6. Process according to any one of claims 1-5, characterised in that the particle size of the carrier is between 0.1 µm and 50 µm.

7. Process according to any one of claims 1-6, characterised in that the catalyst is activated by the presence of one or more elements from the group comprising Cu, Ag, Au, Cd, Ga, In, Tl, Ge, Sn, Pb, As, Sb and Bi.

## Patentansprüche

1. Verfahren zur Herstellung eines Hydroxylammoniumsalzes durch katalytische Reduktion von Nitrationen in einem sauren Medium mit Wasserstoff in Gegenwart eines aktivierten Katalysators, wobei der Katalysator Trägerteilchen mit Metallteilchen, die Palladium und Platin enthalten, umfaßt, dadurch gekennzeichnet, daß die relativen Konzentrationen des Palladiums und des Platins in jedem Metallteilchen im wesentlichen die gleichen sind, wobei die Platinkonzentration in jedem Metallteilchen eine Standardabweichung von weniger als 4% absolut aufweist.

2. Verfahren nach Anspruch 1, dadurch gekennzeichnet, daß die Platinkonzentration in jedem Metallteilchen eine Standardabweichung von weniger als 3,5% absolut aufweist.

3. Verfahren nach Anspruch 2, dadurch gekennzeichnet, daß die Platinkonzentration in jedem Metallteilchen eine Standardabweichung von weniger als 3% absolut aufweist.

4. Verfahren nach einem der Ansprüche 1 bis 3, dadurch gekennzeichnet, daß das Gewichtsverhältnis Palladium:Platin in jedem Metallteilchen zwischen 7:3 und 9,9:0,1 ist.

5. Verfahren nach einem der Ansprüche 1 bis 4, dadurch gekennzeichnet, daß das Trägermaterial aus aktivem Kohlenstoff, Graphit oder Siliziumdioxid besteht.

6. Verfahren nach einem der Ansprüche 1 bis 5, dadurch gekennzeichnet, daß die Teilchengröße des Trägers zwischen 0,1 µm und 50 µm liegt.

7. Verfahren nach einem der Ansprüche 1 bis 6, dadurch gekennzeichnet, daß der Katalysator durch die Gegenwart von einem oder mehreren Element(en) aus der Gruppe, umfassend Cu, Ag, Au, Cd, Ga, In, Tl, Ge, Sn, Pb, As, Sb und Bi, aktiviert wird.

## Revendications

1. Procédé pour la préparation d'un sel d'hydroxylammonium par réduction catalytique d'ions nitrate avec de l'hydrogène en milieu acide, en présence d'un catalyseur activé, lequel catalyseur comprend des particules de support avec des particules de métal contenant du palladium et du platine, caractérisé en ce que les concentrations relatives du palladium et du platine dans chaque particule métallique sont essentiellement identiques, la concentration en platine dans chaque particules métallique a un écart type de moins de 4% en valeur absolue.

2. Procédé selon la revendication 1, caractérisé en ce que la concentration en platine dans chaque particule métallique a un écart type de moins de 3,5% en valeur absolue.

3. Procédé selon la revendication 2, caractérisé en ce que la concentration en platine dans chaque particule métallique a un écart type de moins de 3% en valeur absolue.

4. Procédé selon l'une quelconque des revendications 1 à 3, caractérisé en ce que le rapport en poids palladium : platine dans chaque particule métallique est entre 7 : 3 et 9,9 : 0,1.

5. Procédé selon l'une quelconque des revendications 1 à 4, caractérisé en ce que le matériau support est constitué de charbon actif, de graphite ou de silice.

6. Procédé selon l'une quelconque des revendications 1 à 5, caractérisé en ce que la taille des particules du support est entre 0,1 µm et 50 µm.

7. Procédé selon l'une quelconque des revendications 1 à 6, caractérisé en ce que le catalyseur est activé par la présence d'un ou de plusieurs éléments choisis parmi Cu, Ag, Au, Cd, Ga, In, Tl, Ge, Sn, Pb, As, Sb et Bi.
